# FASCICULE DE BREVET EUROPEEN

(11) **EP 2 754 201 B1**
(45) Date de publication et mention de la délivrance du brevet: **04.01.2017**
(21) Numéro de dépôt: 12769500.5
(22) Date de dépôt: 05.09.2012
(51) Int. Cl.: H01M 10/54, H01M 10/052, C22B 26/12, C22B 7/00, H01M 4/485, H01M 4/58

(54) **PROCÉDÉ DE RECYCLAGE DE BATTERIES AU LITHIUM ET/OU D'ÉLECTRODES DE TELLES BATTERIES**
RECYCLING-VERFAHREN FÜR LITHIUMBATTERIEN UND/ODER ELEKTRODEN VON DERARTIGEN BATTERIEN
METHOD FOR RECYCLING LITHIUM BATTERIES AND/OR ELECTRODES OF SUCH BATTERIES

(30) Priorité: 07.09.2011 FR 1157939
(43) Date de publication de la demande: 16.07.2014
(73) Titulaire: Commissariat à l'Énergie Atomique et aux Énergies Alternatives, 75015 Paris (FR)
(72) Inventeur: LAUCOURNET, Richard, F-38500 La Buisse (FR); BARTHELEMY, Sandrine, F-38160 Saint Marcellin (FR); DIAFERIA, Nathalie, F-38220 Livet et Gavet (FR)
(74) Mandataire: Gevers & Orès
(86) Numéro de dépôt international: PCT/IB2012/054581
(87) Numéro de publication internationale: WO 2013/035048

(56) Documents cités:
- EP-A1- 2 306 583
- EP-A1- 2 450 991
- WO-A1-98/41479
- WO-A1-2005/101564
- WO-A1-2012/072619
- CN-A- 101 847 763
- CN-A- 101 916 889
- FR-A1- 2 796 207
- US-A- 5 888 463
- XU ET AL: "A review of processes and technologies for the recycling of lithium-ion secondary batteries", JOURNAL OF POWER SOURCES, ELSEVIER SA, CH, vol. 177, no. 2, 14 janvier 2008 (2008-01-14), pages 512-527, XP022450299, ISSN: 0378-7753, DOI: 10.1016/J.JPOWSOUR.2007.11.074
- CASTILLO S ET AL: "Advances in the recovering of spent lithium battery compounds", JOURNAL OF POWER SOURCES, ELSEVIER SA, CH, vol. 112, no. 1, 24 octobre 2002 (2002-10-24), pages 247-254, XP004387654, ISSN: 0378-7753, DOI: 10.1016/S0378-7753(02)00361-0

## Description

L'invention concerne un procédé de recyclage de batteries au lithium et plus particulièrement les batteries de type Li-ion et les électrodes de telles batteries.

Le marché des accumulateurs (ou batteries) au lithium, également appelés accumulateurs ou (batteries) Li-ion, est aujourd'hui en forte croissance en raison des nouvelles applications liées principalement à l'émergence et au développement des véhicules hybrides, des véhicules tout électrique, et des appareils électroportatifs.

Ces batteries Li-ion tendent à supplanter les technologies antérieures telles que les batteries au nickel/cadmium et au nickel/ hydrure métallique.

Dans le domaine des batteries au lithium, les batteries de type LFP dans lesquelles les électrodes sont constituées de phosphate mixte de lithium et de fer (LiFePO₄) et de graphite, et les batteries du type LFP/LTO, dans lesquelles les électrodes sont constituées de phosphate mixte de lithium et de fer et d'oxyde mixte de lithium et de titane (Li₄Ti₅O₁₂), sont présentes dans de nombreuses applications.

Ces deux types d'accumulateurs offrent aujourd'hui des perspectives d'applications énormes en termes de marché.

En effet :
- les batteries LFP/G (LiFePO₄/graphite) possèdent les caractéristiques typiques suivantes :
   ∘ Nombre de cycles : 2800,
   ∘ Temps de recharge : entre 30 et 120 minutes,
   ∘ Densité d'énergie : 100 Wh/kg et 2 000 W/kg.

Par conséquent, elles sont bien adaptées aux applications du transport telles que le véhicule électrique (EV), le véhicule hybride rechargeable (PHEV), les autobus, camions, vélos et scooters électriques.
- les batteries LFP/LTO (LiFePO₄/Li₄Ti₅O₁₂) possèdent les caractéristiques typiques suivantes :
   ∘ Nombre de cycles : 30 000,
   ∘ Temps de recharge : 4 minutes,
   ∘ 67 Wh/kg et 8 000 Wh/kg.

Les principales applications de ces batteries sont le véhicule hybride (HEV), le véhicule hybride rechargeable (PHEV), les transports urbains rechargeables à chaque station (trams, bus), le stockage de l'électricité et les infrastructures de recharge (PHEV et EV).

Par ailleurs, les contraintes environnementales croissantes, telle que la directive 2006/66/CE du 6 septembre 2006, imposent aux producteurs d'accumulateurs à assumer le recyclage des accumulateurs commercialisés.

Récemment, une attention toute particulière s'est tournée vers la problématique des ressources nécessaires aux technologies en développement, en particulier des ressources rares et stratégiques. Bien que les batteries LFP et LTO ne semblent pas directement concernées par ces matériaux, une volonté croissante existe de pousser à une réutilisation des matériaux en «boucle fermée» pour certaines filières grosses consommatrices de tels matériaux.

Plus particulièrement, les matériaux contenus dans ces batteries et dont la réutilisation présente un intérêt sont le titane, le fer et le lithium, constituants principaux des électrodes de ces batteries.

A ce jour, les procédés de recyclage des accumulateurs peuvent se diviser en deux grandes familles : les traitements par pyrométallurgie et les traitements par hydrométallurgie.

Les traitements pyrométallurgiques, décrits en particulier dans la demande de brevet EP 1589121 et la demande de brevet WO 2011/035915, consistent à bruler en milieu réducteur (brûleurs gaz) les accumulateurs en totalité en utilisant les matières organiques (polymères, matières carbonées) qu'ils contiennent comme source d'énergie et comme agent réducteur. A l'issue de la combustion, un alliage métallique contenant les éléments métalliques les plus lourds (Co, Ni, Mn, Cu) est récupéré. Le lithium, élément léger, est évacué dans le laitier et dans les fumées de même que l'aluminium. Ces procédés, certes très robustes, présentent cependant de nombreux inconvénients tels que :
- un faible taux de récupération et de valorisation des matériaux contenus dans les accumulateurs car seuls les métaux nobles sont récupérés,
- l'émission de gaz toxiques (HF, dioxines) qui doivent être traités pour ne pas impacter l'environnement.

De plus pour des raisons économiques évidentes, ces procédés ne sont viables uniquement que pour des chimies d'électrodes à fortes teneurs en cobalt et/ou nickel.

Les traitements par voie hydrométallurgique consistent à réaliser un traitement mécanique de broyage de l'accumulateur puis à récupérer la masse noire ("*black mass*" en anglais) composée des matériaux actifs (fer et lithium, cobalt, etc...) pulvérulents, à mettre en solution par attaque acide les matériaux actifs non carbonés, puis à faire précipiter les éléments à récupérer.

Par exemple, la demande de brevet EP1733451 propose une mise en solution complète des matériaux actifs dans l'acide sulfurique concentré (2 N) à 80°C. Le ratio solide/liquide n'est pas précisé. Cette attaque très acide a pour conséquence de polluer la solution en cuivre provenant du collecteur d'électrode. Il est nécessaire d'utiliser de la grenaille d'acier pour récupérer le cuivre. Par la suite, le pH de la solution est augmenté jusqu'à 3,85 par ajout de soude concentrée pour précipiter le fer sous forme d'hydroxyde. Si le matériau actif contient du cobalt, le pH est alors fixé à 5,8 par ajout de soude concentrée puis le bain est électrolysé pour récupérer le cobalt sous forme métallique. Le cas particulier du matériau actif LFP est illustré mais uniquement par le traitement hydrométallurgique d'une poudre synthétisée pour l'occasion et non d'une électrode réelle ou d'un accumulateur complet usagé ou non conforme. La mise en solution totale est analogue à la précédente mais en présence d'eau oxygénée à 30%, le fer est précipité de manière identique et le lithium est récupéré par précipitation d'un phosphate à partir d'une solution basique à pH=12,1, puis acidifiée par ajout d'acide phosphorique à 85% puis réalcalinisée à pH supérieur à 12. La pureté des produits obtenus (hydroxyde de fer et phosphate de lithium) n'est pas mentionnée ni le rendement de récupération. Cette demande de brevet ne précise pas le mode de récupération des autres matériaux entrant dans la composition de l'accumulateur, ni même leur valorisation.

Le brevet US5888463 décrit également une attaque acide complète à l'acide sulfurique des matériaux actifs à base de lithium en vue de récupérer le lithium sous forme d'un carbonate. La récupération des autres éléments du matériau actif n'est pas précisée, ni pas plus que celle des autres matériaux entrant dans la composition d'une batterie Li-ion.

La revue "A review of processes and technologies for the recycling of lithium-ion secondary batteries", Journal of Power Sources 177 (2008) 521-527, divulgue différents procédés de recyclage des batteries au lithium.

De manière synthétique, l'état de l'art montre que :
- les voies pyrométallurgiques sont des procédés robustes avec peu d'étapes, mais ne permettent pas de valoriser une quantité importante de matériaux en vue d'une réutilisation ultérieure. Ces voies se basent sur la valorisation des éléments métalliques à forte valeur ajoutée et nécessite des étapes ultérieure de raffinage pour purifier l'alliage métallique résiduel difficilement adaptables et peu adaptées aux accumulateurs fabriqués à base de LFP et/ou LTO. De plus, d'un point de vue environnemental ces voies sont sources de pollutions atmosphériques et produisent des quantités importantes de gaz à effet de serre, et
- les voies hydrométallurgiques peuvent permettre la récupération d'un nombre plus important de matériaux, mais se focalisent uniquement sur la récupération des éléments tels que le lithium, le fer, le manganèse ou le cobalt. Elles ne visent pas à valoriser un nombre plus important de composés tels que les liants ou les collecteurs de courant ainsi que les matières actives carbonées. D'autre part, la pureté des produits récupérés est le plus souvent ignorée ce qui rend leur valorisation incertaine. Le traitement du LTO n'est pas abordé.

L'invention vise à pallier les inconvénients des procédés de l'art antérieur en proposant un procédé de recyclage d'accumulateur de batteries au lithium et plus particulièrement de batterie dont les électrodes sont à base de LFP/G et/ou de LFP/LTO qui permet de récupérer un nombre important de matériaux dont certains sont susceptibles d'être réintroduits dans la filière de fabrication de nouveaux accumulateurs mais non limités aux seuls matériaux "nobles" tels que les métaux lithium, fer et titane.

En effet, avec le procédé de l'invention, on peut également récupérer les liants contenus dans les électrodes, les matières carbonées actives, les collecteurs de courant et même le solvant du procédé lui-même.

A cet effet, l'invention propose un procédé de recyclage d'électrodes de batterie au lithium et/ou de batteries au lithium à base de phosphate mixte de lithium et de fer et de graphite et/ou à base de phosphate mixte de lithium et de fer et d'oxyde mixte de lithium et de titane selon la revendication 1, caractérisé en ce qu'il comprend les étapes suivantes :
a) broyage desdites électrodes et/ou desdites batteries,
b) dissolution des composants organiques et/ou polymères desdites électrodes et/ou desdites batteries, dans un solvant organique,
c) séparation des métaux des collecteurs de courant non dissous présents dans la suspension obtenue à l'étape b),
d) filtration au travers d'un filtre sous presse de la suspension obtenue à l'étape c),
e) récupération de la masse solide retenue sur le filtre sous presse à l'étape d), et mise en suspension de cette masse solide dans de l'eau,
f) récupération de la matière ayant sédimenté ou coagulé à l'étape e), remise en suspension de cette matière sédimentée dans l'eau et ajustement du pH de la suspension obtenue à un pH inférieur à 5, de préférence inférieur à 4,
g) filtration de la suspension obtenue à l'étape f) sur un filtre sous presse, et
h) séparation d'une part, du fer et par précipitation de phosphates de fer, et, d'autre part, du lithium par précipitation d'un sel de lithium.

Dans un premier mode de mise en oeuvre de l'invention, à l'étape f) le pH est tel que 3 < pH < 4, ce par quoi seul le lithium passe en solution dans le milieu aqueux, et l'étape h) comprend les étapes suivantes :
h1) récupération du filtrat issu de l'étape g) et précipitation d'un sel de lithium,
h2) récupération de la fraction solide retenue sur le filtre sous presse à l'étape g), et mise en solution de cette fraction solide dans de l'eau, ajustement du pH à 2 < pH < 3, à température ambiante, ce par quoi les ions Fe²⁺ et ou Fe³⁺ et les phosphates PO₄³⁻ passent en solution et le titane reste sous forme solide,
h3) filtration de la suspension obtenue à l'étape h2) et récupération du titane solide sur le filtre, et
h4) précipitation du phosphate de fer contenu dans le filtrat obtenu à l'étape h3).

Dans un second mode de mise en oeuvre de l'invention, à l'étape f) le pH est ajusté à pH < 1 et l'étape h) comprend les étapes suivantes :
h5) récupération du titane solide retenu sur le filtre à l'étape g),
h6) récupération du filtrat obtenu à l'étape g) et précipitation du phosphate de fer,
h7) séparation du phosphate de fer par filtration du filtrat obtenu à l'étape h6), et
h8) récupération du filtrat obtenu après la filtration de l'étape h7) et précipitation d'un sel de lithium.

Dans une première variante, l'étape h4) de précipitation du phosphate de fer, dans le premier mode de mise en oeuvre du procédé de l'invention, ou l'étape h6) de précipitation du phosphate de fer dans le second mode de mise en oeuvre du procédé de l'invention, comprend les étapes suivantes :
h4a) ou h6a) ajustement du pH du filtrat récupéré à un pH égal à 5, ce par quoi on forme un précipité,
h4b) ou h6b), récupération du précipité formé à l'étape h4a) ou h6a) par filtration de la suspension obtenue à l'étape h4a) ou h6a), lavage à l'eau et séchage de ce précipité à une température inférieure ou égale à 30°C sous vide primaire, ce par quoi on obtient du phosphate de fer de formule Fe₃(PO₄)₂.8H₂O.

Dans une seconde variante, l'étape h4) de précipitation du phosphate de fer, dans le premier mode de mise en oeuvre du procédé de l'invention, ou l'étape h6) de précipitation du phosphate de fer dans le second mode de mise en oeuvre du procédé de l'invention, comprend les étapes suivantes :
h4c) ou h6c) : ajout de 1% en volume, par rapport au volume total de filtrat récupéré, de H₂O₂ à 30% en volume,
h4d) ou h6d) ajustement du pH de la solution résultant de l'étape h4c) ou h6c) à un pH égal à 5, récupération du précipité formé, lavage et séchage de ce précipité à 50°C, sous air, ce par quoi on obtient du phosphate de fer FePO₄.2H₂O amorphe.

De préférence, après l'étape h4d) ou h6d), le phosphate de fer amorphe obtenu est calciné à 500°C sous air, ce par quoi on obtient le phosphate de fer FePO₄.2H₂O cristallin.

Quant à l'étape de précipitation d'un sel de lithium, notée h1) dans le premier mode de mise en oeuvre du procédé de l'invention et h8) dans le second mode de mise en oeuvre du procédé de l'invention, dans une première variante, elle comprend les étapes suivantes :
h1a) ou h8a) mélange du filtrat obtenu à l'étape g) ou mélange du filtrat obtenu après la filtration de l'étape h7) avec une solution aqueuse ayant un pH supérieur à 12 et contenant une quantité d'ions phosphate (PO₄3⁻) supérieure au tiers de la quantité d'ions lithium (Li⁺) et chauffage du mélange ainsi obtenu à 50°C, ce par quoi on forme un précipité, et
h1b) ou h8b) lavage avec de l'eau du précipité ainsi obtenu, ce par quoi on obtient du phosphate de lithium Li₃PO₄.

Dans une seconde variante, l'étape h1) du premier mode de mise en oeuvre du procédé de l'invention ou l'étape h8) du second mode de mise en oeuvre du procédé de l'invention, de précipitation d'un sel de lithium, comprend les étapes suivantes :
h1c) mélange du filtrat obtenu à l'étape g), récupéré à l'étape h7) ou h8c), avec une solution aqueuse ayant un pH supérieur à 12 contenant une quantité d'ions carbonate (CO₃²⁻) au moins égale à la moitié de la quantité d'ions lithium (Li⁺) contenue dans le mélange,
h1d) ou h8d) chauffage du mélange de l'étape h1c) ou h8c) à une température comprise entre 90°C et 100°C, puis filtration à une température de 100°C, ce par quoi on obtient un extrait sec de carbonate de lithium Li₂CO₃.

Dans une troisième variante, l'étape h1) du premier mode de mise en oeuvre du procédé de l'invention ou l'étape h8) du second mode de mise en oeuvre du procédé de l'invention, de précipitation d'un sel de lithium, comprend les étapes suivantes :
h1e) ou h8e) passage du filtrat obtenu à l'étape g) ou du filtrat obtenu après l'étape h7) sur une résine cationique échangeuse d'ions à un rapport moles de Li⁺ présent dans la solution/ g de résine compris entre 10⁻⁶ et 10⁻²;
h1f) ou h8f) mise en contact de la résine issue de l'étape h1e) ou h8e) avec une solution d'acide à un pH < 3 avec un ratio volumique liquide/résine < 1,
h1g) ou h8g) récupération du carbonate de lithium par filtration, à 100°C, de la suspension obtenue à l'étape h1f) ou h8f).

Dans toutes ses variantes et tous ses modes de mise en oeuvre, le procédé de l'invention, peut comprendre de plus :
- une étape i) de purification du solvant contenu dans le filtrat obtenu à l'étape d), par centrifugation jusqu'à obtention d'un liquide incolore,
- une étape j) d'évaporation-condensation du liquide incolore obtenu à l'étape i) à une température inférieure ou égale à 80°C mais supérieure ou égale à 60°C, ce par quoi on récupère d'une part un solide constitué du liant des électrodes et un liquide constitué du solvant organique utilisé à l'étape d), et
- optionnellement une étape n) de recyclage du solvant obtenu à l'étape j) vers l'étape b).

Le procédé de l'invention peut également comprendre :
- une étape k) d'extraction des matières carbonées de la suspension obtenue à l'étape e), par flottation,
- une étape 1) de lavage avec une solution aqueuse acide ayant un pH < 3, de ces matières carbonées, et
- une étape m) de filtration de ces matières carbonées.

De préférence, dans le procédé de l'invention, le solvant est choisi parmi le dichlorométhane, le cyclohexane, le toluène, l'acétate d'éthyle, le diéthyléther, le 2-butanone, la 1-méthyl-2-pyrrolidone (NMP), le tétrahydrofurane, le N,N-diméthylformamide, le diméthylsulfoxyde, l'acétone, l'éthanol ou l'acétonitrile, ou les mélanges de deux ou plus de ceux-ci.

Toujours de préférence, le procédé de l'invention comprend de plus une étape o) de tri des métaux séparés à l'étape c).

L'invention sera mieux comprise et d'autres caractéristiques et avantages de celle-ci apparaîtront plus clairement à la lecture de la description explicative qui suit et qui est faite en référence aux figures annexées dans lesquelles :
- la figure 1 représente l'organigramme du premier mode de mise en oeuvre du procédé de l'invention,
- la figure 2 représente l'organigramme du second mode de mise en oeuvre du procédé de l'invention,
- la figure 3 représente le spectre obtenu par diffraction des rayons X du phosphate de fer (II) (Fe₂(PO₄)₃.8H₂O) obtenu par le procédé de l'invention après les étapes h4b) et h6b),
- la figure 4 représente le spectre obtenu par diffraction des rayons X du phosphate de fer (III) (FePO₄.2H₂O) obtenu à l'issue de la mise en oeuvre du second mode de mise en oeuvre du procédé de l'invention après les étapes h4d) et h6d),
- la figure 5, représente le spectre obtenu par diffraction des rayons X du phosphate de lithium (Li₃PO₄) obtenu à l'issue de la mise en oeuvre du premier mode de mise en oeuvre du procédé de l'invention aux étapes h1) et h8),
- la figure 6, représente le spectre obtenu par diffraction des rayons X du carbonate de lithium (Li₂CO₃) obtenu à l'issue de la mise en oeuvre du second mode de mise en oeuvre du procédé de l'invention aux étapes h1d) et h8d),

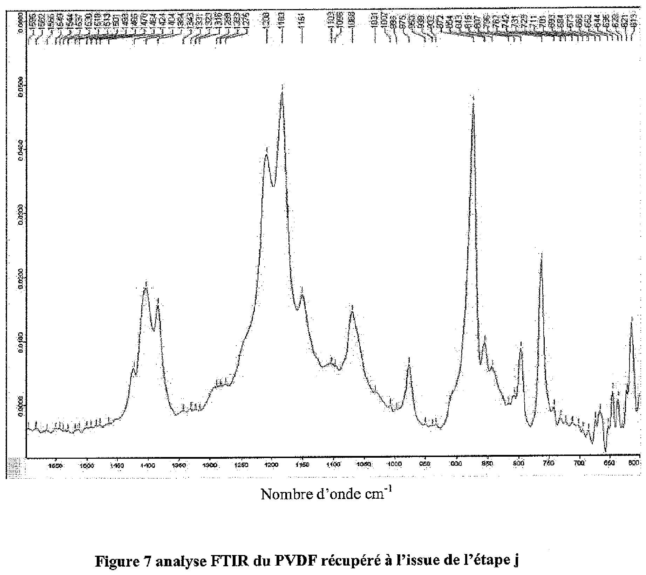

- la figure 7 représente le spectre obtenu par spectroscopie infrarouge (FTIR) du polyvinylidène fluorure (PVDF), extrait récupéré à l'issue de l'étape j) d'une électrode usagée à base de LFP par le procédé de l'invention.

Le procédé de l'invention permet de recycler les matériaux actifs des batteries usagées de type Li-ion, c'est-à-dire le lithium, le fer et le titane.

Ce procédé permet également de recycler des produits semi-finis considérés comme rebuts de production tels que les poudres de matériaux actifs, c'est-à-dire du LFP, du graphite et/ou du LTO, et éventuellement des nanoparticules de carbone qui sont introduites dans les électrodes comme additifs, les encres d'enduction pour les électrodes et le liant des électrodes.

Mais le procédé de l'invention peut également être utilisé pour recycler les électrodes ou batteries non conformes et donc pas uniquement les batteries ou électrodes usagées.

Le procédé de l'invention est basé sur un traitement par voie mécanique et par voie hydrométallurgique permettant la récupération d'un nombre conséquent de matériaux et leur valorisation possible sous la forme de matières premières secondaires dans le circuit de fabrication de nouvelles cellules.

Il vise en particulier à récupérer le lithium, le fer et les phosphates et leur mise sous forme de sels qui peuvent être ensuite réintroduits dans la fabrication de nouveaux accumulateurs.

Le procédé de l'invention permet aussi la récupération des matières carbonées actives provenant de l'électrode négative en carbone ou des additifs de type nanoparticules contenus dans des électrodes LFP et LTO, des collecteurs de courant ainsi que des matériaux actifs non carbonés, c'est-à-dire du LFP et/ou du LTO, en vue d'une réutilisation dans la filière de fabrication des batteries, sous la forme de précurseurs.

Le procédé de l'invention comprend une association d'étapes de traitement mécanique couplées à des étapes de traitement chimique.

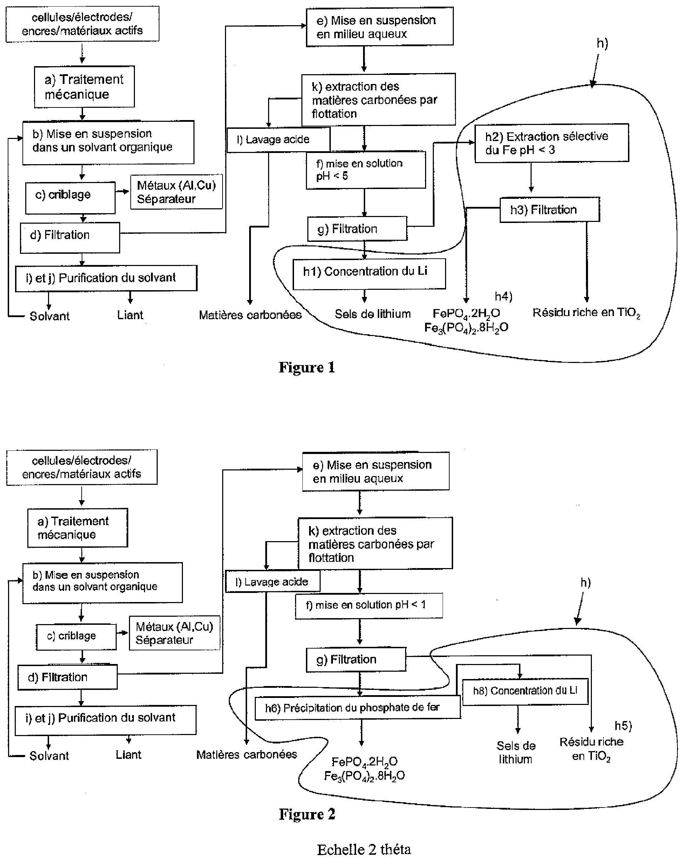

L'association de ces étapes est décrite sous forme d'organigramme en figure 1 et en figure 2.

Le procédé de l'invention sera décrit en relation avec ces figures 1 et 2.

Dans le texte qui suit et qui précède, lorsqu'aucune atmosphère particulière ou température particulière n'est précisée, l'étape concernée se déroule sous air et à température ambiante.

Par température ambiante, on entend une température comprise entre 17 et 30°C.

Comme on le voit en figures 1 et 2, la première étape du procédé de recyclage d'électrodes de batteries au lithium et/ou de batteries au lithium de la présente invention, est une étape a) de broyage-concassage de ces électrodes et/ou de ces batteries usagées ou non conformes.

Cette étape est réalisée à l'aide d'un broyeur à couteaux ou à disques, par exemple.

La fraction solide résultant de cette étape, qui est destinée à passer à l'étape suivante du procédé de l'invention, est composée de copeaux de dimensions comprises entre 0,5 et 2 cm, inclus.

La seconde étape du procédé de l'invention, comme on le voit en figures 1 et 2, est une étape b) de dissolution, dans un solvant organique, des composants organiques et/ou polymères compris dans la charge récupérée à l'étape a), c'est-à-dire des composants organiques et/ou polymères desdites électrodes et/ou desdites batteries.

Pour cela, la charge récupérée est introduite dans un réservoir en présence d'un solvant organique capable de dissoudre le liant des électrodes, généralement le polyvinylidène fluorure (PVDF).

A cette étape b), de préférence, le rapport en poids solide/liquide est compris entre 1 et 20%.

De préférence, cette mise en solution est réalisée sous agitation à 30 tr/min pendant 4 heures à température ambiante. Le solvant utilisé peut être choisi parmi : le dichlorométhane, le cyclohexane, le toluène, l'acétate d'éthyle, le diéthyléther, le 2-butanone, la 1-méthyl-2-pyrrolidone (NMP), le tétrahydrofurane, le N,N-diméthylformamide, le diméthylsulfoxyde, l'acétone, l'éthanol ou l'acétonitrile, ou les mélanges de deux ou plus de ceux-ci.

Toujours comme on le voit en figures 1 et 2, à l'issue de cette étape b), on procède à une étape c) de séparation des métaux non dissous à l'étape b). Ces métaux proviennent des collecteurs de courant et sont, en particulier, du cuivre et/ou de l'aluminium.

Cette étape est une étape de criblage permettant la séparation des matériaux pulvérulents en suspension des éléments massifs sous forme de copeaux tels que les collecteurs métalliques qui sont en cuivre et en aluminium, le séparateur qui est en polymère et les alliages des enveloppes des accumulateurs, c'est-à-dire des emballages en aluminium ou en polymères.

Ces éléments massifs sont par la suite triés par des méthodes usuelles telles que l'application de champs électriques pour les aciers, de courants de Foucault pour les alliages à base d'aluminium et par sédimentation pour les polymères, en particulier constituant le séparateur.

Puis, comme montré en figures 1 et 2, à l'étape d) du procédé de l'invention, la suspension contenant les matériaux actifs et le liant dissout dans le solvant organique et dont les métaux ont été séparés, est ensuite, à l'étape d), filtrée au travers d'un filtre sous presse.

La masse solide (gâteau) retenue sur le filtre du filtre sous presse est, à l'étape notée e) en figures 1 et 2, récupérée et mise en suspension dans de l'eau, de préférence dans une cellule de flottation.

Les matières carbonées hydrophobes ne sont pas mouillées par l'eau et ont une tendance naturelle à remonter en surface, alors que les composés de type oxyde ou phosphate sont hydrophiles et ont tendance à sédimenter au fond de la cellule.

Cette séparation matières carbonées hydrophobes/composés de type oxyde ou phosphate hydrophile peut être activée par l'utilisation d'agents de coagulation tels que des copolymères d'acrylamide et par injection d'air.

Le procédé de l'invention comprend alors une étape f) de récupération de la matière sédimentée et/ou coagulée à l'issue de l'étape e) : cette matière est remise en suspension par agitation et ajout d'un acide tel que HCl, HNO₃ ou H₂SO₄, pour obtenir un pH < 5, de préférence < 4, à l'étape notée f) en figures 1 et 2.

A cette étape, une agitation permanente de 30 tr/min pendant 8 heures permet une extraction sélective du lithium contenu dans les matériaux actifs non carbonés.

Pour réduire la durée de cette extraction, il est possible d'appliquer des ultrasons.

Dans ce cas, la durée du traitement peut être de seulement 4 heures.

On procède ensuite à l'étape notée g) en figures 1 et 2 du procédé de l'invention, qui consiste en la filtration, sur filtre sous presse, de la suspension obtenue à l'étape f) précédente.

On procède ensuite à l'étape notée h) en figures 1 et 2 de séparation du fer et du lithium. Pour séparer le fer, on provoque sa précipitation avec les ions phosphates, pour obtenir du phosphate de fer. Pour séparer le lithium, on provoque une précipitation d'un sel de lithium. Il reste encore des ions phosphates non réagis dans le filtrat.

Le titane est également récupéré après cette étape h).

Différentes façons de séparer le fer, le lithium et le titane peuvent être utilisées en fonction du pH utilisé et de la présence ou l'absence de H₂O₂ à l'étape f).

Ainsi, dans une première variante du procédé de l'invention, à l'étape f), le pH de la suspension est ajusté à un pH inférieur à 4.

A ce pH, le lithium passe en solution dans le milieu aqueux.

Mais, le pH ne doit pas être inférieur à 3 car les autres éléments des matériaux tels que le fer, et le phosphore passent en solution à un pH < 3. Le titane passe également en solution à un pH < 2. Ils pourraient polluer les sels obtenus à partir du lithium.

Ainsi, en choisissant un pH tel que 3 < pH < 4 à l'étape f), seul le lithium passe en solution dans le milieu aqueux et, à l'étape g) de filtration de la suspension obtenue à l'étape f), et le lithium solubilisé se retrouve dans le filtrat obtenu à l'étape g), et les autres matériaux restent sur le filtre.

L'étape h) comprend alors les étapes suivantes :
- une étape h1) de récupération du filtrat issu de l'étape g) et la précipitation d'un sel de lithium, et
- une étape h2) de récupération de la fraction solide retenue sur le filtre presse à l'étape g), la mise en solution de cette fraction solide dans un milieu aqueux puis ajustement du pH à un pH tel que 2 < pH < 3. Le pH a été à cette étape amené à une valeur inférieure à 3 mais supérieure à 2 pour éviter la mise en solution du titane, le fer et les phosphates passent en solution mais le titane reste toujours sous forme solide.

On procède alors à une étape h3) de filtration de la suspension obtenue à l'étape h2). Le titane solide est récupéré sur le filtre et on procède ensuite à la précipitation du phosphate de fer contenu dans le filtrat obtenu à l'étape h2).

Puis, à l'étape notée h4) en figure 1, on précipite le phosphate de fer contenu dans le filtrat de l'étape h3).

Mais, on peut également procéder comme représenté en figure 2, c'est-à-dire selon le second mode de mise en oeuvre du procédé de l'invention : à l'étape f) le pH est ajusté à un pH inférieur à 3 mais supérieur à 2.

Dans ce cas, comme indiqué précédemment, le lithium, le fer et les phosphates passent en solution mais pas le titane.

L'étape h) comprend alors l'étape de récupération du titane solide retenu sur le filtre à l'étape g).

Le filtrat est ensuite récupéré à l'étape h6).

On procède alors à la précipitation de phosphate de fer et on sépare ce phosphate de fer, dans une étape h7), par filtration de la solution.

Ensuite, à l'étape h8), on récupère le filtrat obtenu après cette filtration de l'étape h7) et on précipite le sel de lithium.

Les étapes h3) et h7) de filtration peuvent être effectuées sur tout type de filtres tels que en papier, en plastique, etc...mais ayant une taille de pores inférieure à 2 µm.

Dans les deux modes de réalisation de l'invention, la précipitation du phosphate de fer peut être réalisée de deux manières différentes.

Dans une première variante des deux modes de mise en oeuvre du procédé de l'invention, l'étape de précipitation du phosphate de fer, notée h4) dans le premier mode de mise en oeuvre du procédé de l'invention représenté en figure 1 ou notée h6) dans le second mode de mise en oeuvre du procédé de l'invention représenté en figure 2, comprend les étapes h4a) ou h6a) d'ajustement du pH du filtrat récupéré à ces étapes à un pH égal à 5.

Dans ce but, on peut ajouter toute base connue de l'homme du métier, telle que la soude (NaOH), ou l'ammoniac (NH₃).

Un précipité de couleur bleu ciel se forme.

Ce précipité est récupéré à l'étape h4b) ou h6b), selon le mode de réalisation, par filtration.

Le précipité récupéré est ensuite lavé à l'eau puis séché sous vide primaire (c'est-à-dire une pression < 10 mbar). Il est à noter que tant qu'il y a de l'eau dans le précipité, la température est de 15°C. Cette température augmente dès que le séchage est terminé et ne doit pas excéder 30°C car, au-delà, le fer ferrique (Fe³⁺) s'oxyde en fer ferreux (Fe²⁺) et le composé est déstabilisé.

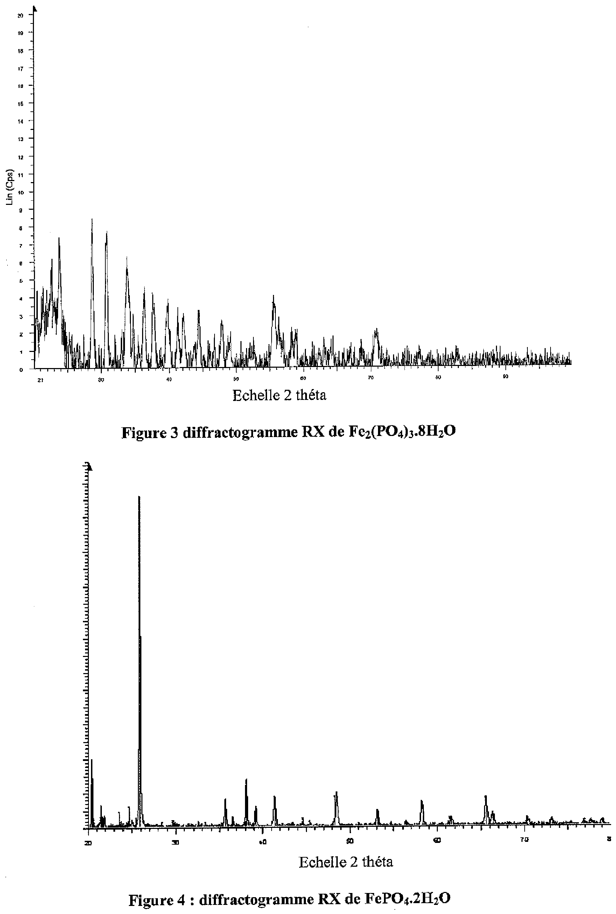

Après séchage complet, on obtient, comme montré par le spectre obtenu par analyse par analyse de diffraction X montré en figure 3, un phosphate de fer de formule Fe₃(PO₄)₂.8H₂O.

Une seconde façon de former un précipité de phosphate de fer est la suivante : dans une étape h4c) ou h6c), selon le mode de réalisation, la totalité du fer en solution est oxydé en Fe³⁺.

Cela est réalisé par un ajout de 1% en volume, par rapport au volume total de filtrat récupéré, de H₂O₂ à 30% en volume.

Ensuite, dans une étape h4d) ou h6d), le pH est remonté par ajout d'une base à un pH = 5. Un précipité blanc se forme. Après séchage à 50°C, on obtient un précipité amorphe de phosphate de fer FePO₄.2H₂O.

On peut alors, si souhaité, calciner ce phosphate de fer amorphe à 500°C sous air pour obtenir le phosphate de fer FePO₄.2H₂O cristallin sans impureté.

Cela est confirmé par le spectre de diffraction des rayons X montré en figure 4.

Une analyse thermogravimétrique de ce phosphate de fer cristallin confirme une hydratation du composé obtenu à l'issu de l'étape de calcination à 500°C par 2 moles d'eau.

Quant à l'étape de précipitation d'un sel de lithium, à l'étape h), elle peut être mise en oeuvre selon trois variantes.

Dans une première variante, la solution obtenue après la filtration de l'étape g), dans le premier mode de mise en oeuvre du procédé de l'invention, ou l'étape h7) dans le second mode de mise en oeuvre du procédé de l'invention, c'est-à-dire le filtrat, est versée dans une solution basique ayant un pH supérieur à 12 et contenant une quantité d'ions phosphate (PO₄³⁻) au moins supérieure au tiers de la quantité d'ions lithium Li⁺.

Après un chauffage à 50°C, un précipité est obtenu.

Il s'agit là de l'étape h1a) ou h8a) du procédé de l'invention.

Ce précipité, à l'étape h1b) ou h8b) est lavé avec de l'eau.

L'analyse par diffraction des rayons X montre que ce précipité correspond bien au sel de lithium de formule Li₃PO₄.

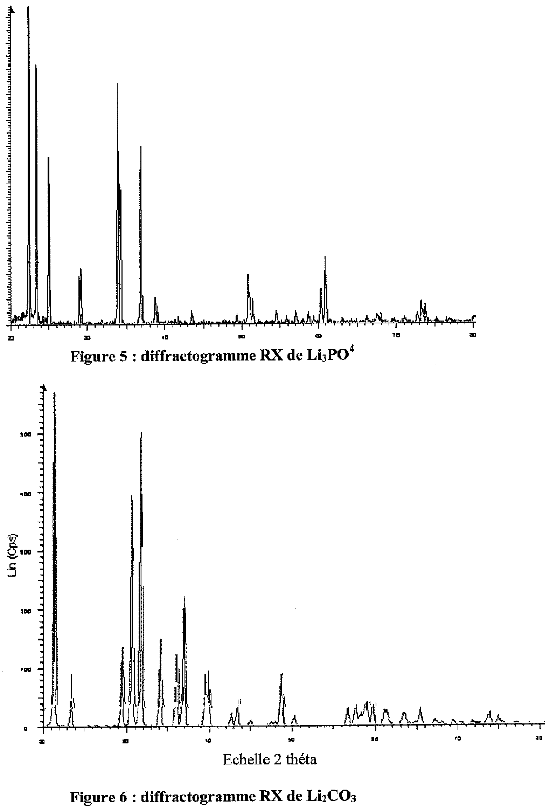

Le spectre de diffraction des rayons X obtenu sur ce précipité est montré en figure 5.

Dans une seconde variante, l'étape h1) ou h8) des modes de mise en oeuvre respectifs du procédé de l'invention, un précipité de sel lithium est obtenu de la façon suivante : dans une étape h1c) ou h8c), respectivement, le filtrat obtenu à l'étape g) dans le premier mode de mise en oeuvre du procédé de l'invention, ou à l'étape h7) dans le second mode de mise en oeuvre du procédé de l'invention, est versé dans une solution aqueuse ayant un pH supérieur à 12 et contenant une quantité d'ions carbonate (CO₃²⁻) au moins équivalente à la moitié de la quantité d'ions lithium (Li⁺) contenus dans le mélange.

En raison de la solubilité non négligeable du carbonate de lithium de formule Li₂CO₃ à température ambiante, c'est-à-dire de 1,54 g/100 ml, il est préférable d'augmenter la température de la solution à entre 90°C et 100°C, le plus préférablement à 100°C, car à ces températures la solubilité du carbonate de lithium est inférieure. Elle est de 0,72 g/100 ml.

Le précipité carbonate de lithium est récupéré par filtration à une température de 100.°C

Dans une troisième variante des deux modes de mise en oeuvre du procédé de l'invention, l'étape h1) ou l'étape h8) comprend les étapes suivantes :
h1e) ou h8e) passage du filtrat obtenu à l'étape g) sur une résine cationique échangeuse d'ions à un rapport moles de Li⁺ présentes dans la solution/ g de résine compris entre 10⁻⁶ et 10⁻².

Les résines utilisables sont constituées de polymères à groupements fonctionnels de type sulfonique (-SO3⁻) ou carboxylique (-COO⁻). Des exemples de telles résines sont les résines commercialisées sous la référence Dowex^{®} 50WX2, et les résines commercialisées sous la référence AMBERLITE^{®}. On peut également utiliser des charbons actifs ou des zéolithes.

De préférence, on utilise une résine cationique échangeuse d'ions de type Dowex^{®} 50WX2 qui permet, en fixant les ions Li⁺, d'obtenir une solution plus concentrée en Li⁺ et par conséquent un rendement de récupération en lithium plus élevé. Pour ce faire, la solution issue de l'extraction sélective du Li⁺ (étapes h1) ou h8)) est mise en contact avec cette résine selon un rapport moles de Li⁺ présentes dans la solution/ g de résine compris entre 10⁻⁶ et 10⁻².

Puis, à l'étape h1f) ou h8f), la résine est mise en contact avec une solution d'acide à un pH<3 avec un ratio volumique liquide/résine <1. Tout type d'acide, tel que HCl, HNO₃, H₂O₄, peut être utilisé. Le pH de la solution est inférieur à 3, de préférence inférieur à 1, pour faciliter l'échange entre Li⁺ fixé sur la résine et H⁺ de l'acide.

A l'étape h1g) ou h8g) le carbonate de lithium précipité est alors récupéré par filtration à 100°C de la suspension obtenue à l'étape h1f) ou h8f).

Le procédé de l'invention, dans tous ses modes de mise en oeuvre et toutes ses variantes peut de plus comprendre une étape i) de purification du solvant contenu dans le filtrat obtenu à l'étape d), par centrifugation, de préférence à 4000 tours/min pendant 10 minutes, jusqu'à obtention d'un liquide incolore, suivie d'une étape j) d'évaporation-condensation de ce liquide incolore à une température inférieure ou égale à 80°C mais supérieure ou égale à 60°C.

On récupère alors d'une part un solide constitué du liant des électrodes et un liquide constitué du solvant organique utilisé à l'étape b) et qui est ensuite réinjecté dans cette étape b), si on le souhaite.

Le procédé de l'invention dans tous ses modes de mise en oeuvre et toutes ses variantes peut également de plus comprendre une étape k) d'extraction des matières carbonées de la suspension obtenue à l'étape e), par flottation, une étape 1) de lavage de ces matières carbonées avec une solution aqueuse acide ayant un pH < 3, et enfin d'une étape m) de filtration de ces matières carbonées.

Encore dans tous ses modes de mise en oeuvre et toutes ses variantes, le procédé de l'invention peut de plus comprendre une étape n) de recyclage du solvant obtenu à l'étape j) vers l'étape b).

Toujours dans tous ses modes de mise en oeuvre et toutes ses variantes, le procédé de l'invention peut de plus comprendre une étape o) de tri des métaux séparés à l'étape e), en particulier dans le but de récupérer les collecteurs de courant.

Ainsi, comme on le voit, l'invention présente l'avantage d'augmenter le rendement des matières contenues dans les accumulateurs par rapport aux procédés conventionnels.

De plus, elle permet d'augmenter la valeur des produits recyclés en leur conférant des propriétés chimiques compatibles avec une réintroduction dans la filière de fabrication de nouveaux accumulateurs.

En effet, Li₃PO₄, Li₂CO₃, Fe₃(PO₄)₂.8H₂O et FePO₄.2H₂O peuvent être utilisés dans la synthèse des matériaux LFP et LTO d'électrodes.

Le liant des électrodes, le collecteur de courant et le solvant, peuvent être réutilisés soit dans le procédé de recyclage de l'invention pour le solvant, soit dans la fabrication de nouvelles batteries pour le collecteur, soit encore dans la fabrication de nouvelles électrodes pour le liant.

Afin de mieux faire comprendre l'invention, on va maintenant en décrire à titre d'exemples purement illustratifs et non limitatifs plusieurs exemples de mise en oeuvre.

### Exemple 1 :

Traitement d'un rebut de production d'électrode de LFP.

100 g d'électrode de LFP composée en poids de 74,9% de LFP, de 4,2% de carbone, de 3,7% de PVDF et 17,2% de feuille d'aluminium, sont disposés dans 1 L de DMSO sous la forme de copeaux d'environ 1 cm². Après une agitation de 4 H à 30 tr/min, les copeaux d'aluminium sont séparées de la suspension par criblage. Leur aspect indique l'absence de particules de carbone ou de LFP en surface de l'aluminium. La quantité récupérée correspond à la totalité da la feuille d'aluminium utilisée en tant que collecteur. La suspension est filtrée par filtre presse et le solvant une fois centrifugé est évaporé à 75°C puis condensé à l'aide d'une colonne à condenser 98% du solvant est ainsi récupéré et peut être réutilisé pour une nouvelle opération d'extraction. A l'issue de l'évaporation du solvant, un résidu est récolté et correspond à 3,65g soit 98,7% de la quantité totale de PVDF introduite lors de son élaboration.

Le gâteau issu de l'opération de filtration par pressage est ensuite mis en suspension dans 900 ml d'eau contenant 10 ml d'une solution de polychlorure de diallyldiméthylammonium (polyDADMAC^{®}) commercialisée par la société SNF. La suspension est mise sous agitation avec un bullage d'air dans une cellule de flottation. Au bout de 4 H, l'écume est récupérée. Son analyse par diffractométrie de rayons X (DRX) montre exclusivement du graphite. L'analyse chimique réalisée montre la présence en très faible quantité (< 0,2% pds par rapport au poids de graphite) de LFP. Celui-ci disparaît après un lavage à l'acide chlorhydrique (0,1 mol/l).

La suspension après extraction des particules de carbone est acidifiée par ajout de HCl concentré (36%) jusqu'à pH=4. Après 8 H sous agitation, la suspension est filtrée par filtre presse et le surnageant versé dans une solution à 50°C de soude à pH=12 contenant une concentration de (NH₄)₂HPO₄ de 30 g/l. Après 4 H, le précipité formé est filtré puis lavé. 17,6 g de Li₃PO₄ sont obtenus ce qui correspondant à une récupération de 96,1% du lithium contenu dans les 100g d'électrode.

La fraction solide issue de l'étape de filtration par pressage est ensuite placée dans une solution acide de HCl concentré. La solution à un pH=1. Après 4H d'agitation la quasi-totalité du solide est solubilisée. Le pH de la solution est progressivement remonté jusqu'à pH 5. Un précipité bleu ciel se forme. Après filtration est lavage, le solide récupéré est placé dans un enceinte sous vide équipé d'un thermocouple dont l'extrémité est placé au sein du solide. L'enceinte est placée sur une plaque chauffante réglée à 60°C. Cependant jusqu'au séchage complet du solide la température est mesurée à 15°C. Dès que celle-ci augmente au delà de 20°C, le chauffage est stoppé et le vide cassé. L'analyse par DRX montre que le solide récupéré et séché correspond à la formule Fe₃(PO₄)₂.8H₂O. La masse de phosphate de fer (II) est de 115,1 g ce qui représente un taux de récupération et valorisation du fer sous forme de phosphate supérieur à 96.7% par rapport au fer contenu au départ..

### Exemple 2 :

### Traitement d'un rebut de production d'électrode de LTO

100 g d'électrode de LTO composée en poids de 80,0% de LTO, de 7,0% de carbone, de 3,0 % de PVDF et 10,0% de feuille d'aluminium, sont disposés dans 1 L de *N*-Méthyl-2-pyrrolidone (NMP) sous la forme de copeaux d'environ 1 cm². Après une agitation de 4 heures à 30 tr/min, les copeaux d'aluminium sont séparés de la suspension par criblage. Leur aspect indique l'absence de particules de carbone ou de LTO en surface de l'aluminium. La quantité récupérée correspond à la totalité da la feuille d'aluminium utilisée en tant que collecteur. La suspension est filtrée par filtre presse et le solvant une fois centrifugé est évaporé à 95°C puis condensé à l'aide d'une colonne à distiller. 98% en volume du solvant est ainsi récupéré et peut être réutilisé pour une nouvelle opération d'extraction. A l'issue de l'évaporation du solvant, un résidu est récolté et correspond à 2,86g soit 95,4% de la quantité totale de PVDF introduite lors de son élaboration.

Le gâteau issu de l'opération de filtration par pressage est ensuite mis en suspension dans 900 ml d'eau contenant 10 ml d'une solution de polyDADMAC^{®} commercialisée par la société SNF. La suspension est mise sous agitation avec un bullage d'air dans une cellule de flottation. Au bout de 4 heures, l'écume est récupérée. Son analyse par DRX montre exclusivement du graphite. L'analyse chimique réalisée montre la présence en très faible quantité (< 0,2% en poids) de LTO. Celui-ci disparaît après un lavage à l'acide chlorhydrique (0,1 mol/l) à 80°C pendant 2 heures.

La suspension après extraction des particules de carbone est acidifiée par ajout de HCl concentré (36%) jusqu'à pH=2. Après 8 heures sous agitation et application d'ultrasons, la suspension est filtrée par filtre presse et le surnageant versé dans une solution à 50°C de soude à pH=12 contenant une concentration de (NH₄)₂HPO₄ de 30 g/l. Après 4 heures, le précipité formé est filtré puis lavé. 26,5 g de Li₃PO₄ sont obtenus ce qui correspondant à une récupération de 98,5% du lithium contenu dans les 100 g d'électrode.

### Exemple 3 :

Traitement d'un rebut de production composé d'un mélange d'électrodes de LFP et de LTO.

50 g d'électrode de LFP composée en poids de 74,9% de LFP, de 4,2% de carbone, de 3,7% de PVDF et 17,2% de feuille d'aluminium et 50 g d'électrode de LTO composée de 80,0% de LTO, de 7,0% de carbone, de 3,0 % de PVDF et 10,0% de feuille d'aluminium, sont disposés dans 1 L de NMP sous la forme de copeaux d'environ 1 cm². Après une agitation de 4 H à 30 tr/min, les copeaux d'aluminium sont séparés de la suspension par criblage. Leur aspect indique l'absence de particules de carbone ou de LFP en surface de l'aluminium. La quantité récupérée correspond à la totalité da la feuille d'aluminium utilisée en tant que collecteur. La suspension est filtrée par filtre presse et le solvant une fois centrifugé est évaporé à 75°C puis condensé à l'aide d'une colonne à condenser. 98% du solvant est ainsi récupéré et peut être réutilisé pour une nouvelle opération d'extraction. A l'issue de l'évaporation du solvant, un résidu est récolté et correspond à 3,31g soit 98,7% de la quantité totale de PVDF introduite lors de son élaboration.

Le gâteau issu de l'opération de filtration par pressage est ensuite mis en suspension dans 900 ml d'eau contenant 10 ml d'une solution de polyDADMAC^{®} commercialisée par la société SNF. La suspension est mise sous agitation avec un bullage d'air dans une cellule de flottation. Au bout de 4 H, l'écume est récupérée. Son analyse par DRX montre exclusivement du graphite.

La suspension après extraction des particules de carbone est acidifiée par ajout de HCl concentré (36%) jusqu'à pH=2. Après 8 heures sous agitation et application d'ultrasons, la suspension est filtrée par filtre presse. A ce stade, la totalité du LFP est passée en solution et la majeure partie du lithium contenu dans le LTO également. Le composé solide restant riche en TiOx est alors récupéré par filtration.

10 ml de H₂O₂ sont ajoutés à la solution après filtration afin d'oxyder les ions Fe²⁺ en ions Fe³⁺. Puis le pH est progressivement augmenté par des ajouts de NH₃ concentré (20 %). Un précipité blanc se forme alors. Il est extrait par centrifugation. Le précipité est ensuite lavé à l'eau et séché. Son analyse par DRX et par thermogravimétrie permettent de confirmer la présence de FePO₄.2H₂O. Une quantité totale de 42,50 g de ce composé est récupéré ce qui représente 95,8% de récupération du fer sous cette forme.
La solution après extraction du fer qui représente environ 800 ml est versée au travers d'une colonne contenant 600 g de résine de type DOWEX^{®} 50WX2. Cette résine a pour fonction de fixer les ions lithium. Celle-ci est ensuite lavée par 300 ml d'eau. Puis le lithium est extrait par un passage de 300 ml d'acide HCl à 0,1 mol/l. les 200 premiers ml provenant de l'élution contiennent la majeur partie du lithium fixé sur la résine. Cette fraction de l'élution est ensuite versée sous agitation dans 300 ml d'une solution de Na₂CO₃ portée à 95°C à 4 mol/l et présentant un pH>12. Un dépôt de Li₂CO₃ se forme et est récupéré par filtration à chaud afin de limiter la perte due à la solubilité de ce composé dans l'eau. A l'issue de cette opération, une quantité de 17,3 g de Li₂CO₃ est obtenue, ce qui représente 80,0% du lithium présent.

## Revendications

1. Procédé de recyclage d'électrodes de batterie au lithium à base de phosphate mixte de lithium et de fer et de graphite et/ou à base de phosphate mixte de lithium et de fer et d'oxyde mixte de lithium et de titane et/ou de batteries au lithium contenant de telles électrodes, **caractérisé en ce qu'**il comprend les étapes suivantes :
a) broyage desdites électrodes et/ou desdites batteries,
b) dissolution des composants organiques et/ou polymères desdites électrodes et/ou desdites batteries, dans un solvant organique,
c) séparation des métaux non dissous présents dans la suspension obtenue à l'étape b),
d) filtration au travers d'un filtre sous presse de la suspension obtenue à l'étape c),
e) récupération de la masse solide retenue sur le filtre sous presse à l'étape d), et mise en suspension de cette masse solide dans de l'eau,
f) récupération de la matière ayant sédimenté ou coagulé à l'étape e), remise en suspension de cette matière sédimentée dans de l'eau et ajustement du pH de la suspension obtenue à un pH inférieur à 5, de préférence inférieur à 4,
g) filtration de la suspension obtenue à l'étape f) sur un filtre sous presse, et
h) séparation d'une part, du fer par précipitation de phosphates de fer, et d'autre part, du lithium par précipitation d'un sel de lithium.

2. Procédé selon la revendication 1, **caractérisé en ce qu'**à l'étape f) le pH est tel que 3 < pH < 4, ce par quoi seul le lithium passe en solution dans le milieu aqueux, et **en ce que** l'étape h) comprend les étapes suivantes :
h1) récupération du filtrat issu de l'étape g) et précipitation d'un sel de lithium,
h2) récupération de la fraction solide retenue sur le filtre sous presse à l'étape g), et mise en solution de cette fraction solide dans de l'eau, ajustement du pH à 2 < pH < 3 à température ambiante, ce par quoi les ions Fe²⁺ et Fe³⁺ et les ions phosphates PO₄³⁻ passent en solution et le titane reste sous forme solide,
h3) filtration de la suspension obtenue à l'étape h2) et récupération du titane solide sur le filtre, et
h4) précipitation du phosphate de fer contenu dans le filtrat obtenu à l'étape h3).

3. Procédé selon la revendication 1, **caractérisé en ce qu'**à l'étape f) le pH est ajusté à pH < 1 et **en ce que** l'étape h) comprend les étapes suivantes :
h5) récupération du titane solide retenu sur le filtre à l'étape g),
h6) récupération du filtrat obtenu à l'étape g) et précipitation du phosphate de fer,
h7) séparation du phosphate de fer par filtration du filtrat obtenu à l'étape h6), et
h8) récupération du filtrat obtenu après la filtration de l'étape h7) et précipitation d'un sel de lithium.

4. Procédé selon la revendication 2 ou 3, **caractérisé en ce que** l'étape h4) ou l'étape h6) de précipitation du phosphate de fer comprend les étapes suivantes :
h4a) ou h6a) ajustement du pH du filtrat récupéré à un pH égale à 5, ce par quoi on forme un précipité,
h4b) ou h6b) filtration de la suspension obtenue à l'étape h4a) ou h6a), récupération du précipité formé à l'étape h4a) ou h6a), lavage à l'eau et séchage de ce précipité à une température inférieure ou égale à 30°C sous vide primaire, ce par quoi on obtient du phosphate de fer de formule Fe₃(PO₄)₂.8H₂O.

5. Procédé selon la revendication 2 ou 3, **caractérisé en ce que** l'étape h4) ou l'étape h6) de précipitation du phosphate de fer comprend les étapes suivantes :
h4c) ou h6c) : ajout de 1% en volume, par rapport au volume total de filtrat récupéré, de H₂O₂ à 30% en volume,
h4d) ou h6d) ajustement du pH de la solution résultant de l'étape h4c) ou h6c) à un pH égal à 5, récupération du précipité formé, lavage et séchage de ce précipité à 50°C, sous air, ce par quoi on obtient du phosphate de fer FePO₄.2H₂O amorphe.

6. Procédé selon la revendication 5, **caractérisé en ce qu'**après l'étape h4d) ou h6d), le phosphate de fer amorphe obtenu est calciné à 500°C sous air, ce par quoi on obtient le phosphate de fer FePO₄.2H₂O cristallin.

7. Procédé selon l'une quelconque des revendications 2 à 6, **caractérisé en ce que** l'étape h1) ou l'étape h8) de précipitation d'un sel de lithium, comprend les étapes suivantes :
h1a) ou h8a) mélange du filtrat obtenu à l'étape g) ou mélange du filtrat obtenu à l'étape h7) avec une solution aqueuse ayant un pH supérieur à 12 et contenant une quantité d'ions phosphate PO₄³⁻ supérieure au tiers de la quantité d'ions lithium Lⁱ⁺ et chauffage du mélange ainsi obtenu à 50°C, ce par quoi on forme un précipité, et
h1b) ou h8b) lavage avec de l'eau du précipité ainsi obtenu, ce par quoi on obtient du phosphate de lithium Li₃PO₄.

8. Procédé selon l'une quelconque des revendications 2 à 6, **caractérisé en ce que** l'étape h1) ou h8) de précipitation d'un sel de lithium, comprend les étapes suivantes :
h1c) ou h8c) mélange du filtrat obtenu à l'étape g) ou du filtrat de l'étape h7 avec une solution aqueuse ayant un pH>12 contenant une quantité d'ions carbonate C0₃²⁻ au moins égale à la moitié de la quantité d'ions lithium Li⁺ contenue dans le mélange,
h1d) ou h8d) chauffage du mélange de l'étape h1c) ou h8c) à une température comprise entre 90°C et 100°C et filtration à 100°C de la suspension obtenue, ce par quoi on obtient un extrait sec de carbonate de lithium Li₂CO₃.

9. Procédé selon l'une quelconque des revendications 2 à 6, **caractérisé en ce que** l'étape h1) ou h8) de précipitation d'un sel de lithium, comprend les étapes suivantes :
h1e) ou h8e) passage du filtrat obtenu à l'étape g) ou du filtrat de l'étape h7) sur une résine cationique échangeuse d'ions constituée de polymères à groupements fonctionnels carboxyliques -COO⁻ à un rapport moles de Li⁺ présentes dans la solution/ g de résine compris entre 10⁻⁶ et 10⁻².
h1f) ou h8f) mise en contact de la résine issue de l'étape h1f) ou h8e) avec une solution d'acide ayant un pH < 3 avec un ratio volumique liquide/résine < 1,
h1g) ou h8g) récupération du carbonate de lithium par filtration à 100°C de la suspension obtenue à l'étape h1f) ou h8f).

10. Procédé selon l'une quelconque des revendications précédentes, **caractérisé en ce qu'**il comprend de plus :
- une étape i) de purification du solvant contenu dans le filtrat obtenu à l'étape d), par centrifugation jusqu'à obtention d'un liquide incolore,
- une étape j) d'évaporation-condensation du liquide incolore obtenu à l'étape i) à une température inférieure ou égale à 80°C mais supérieure ou égale à 60°C, ce par quoi on récupère d'une part un solide constitué du liant des électrodes et, d'autre part, un liquide constitué du solvant organique utilisé à l'étape b), et
- optionnellement, une étape n) de recyclage du solvant obtenu à l'étape j) vers l'étape b).

11. Procédé selon l'une quelconque des revendications précédentes, **caractérisé en ce qu'**il comprend de plus :
- une étape k) d'extraction des matières carbonées de la suspension obtenue à l'étape e), par flottation,
- une étape 1) de lavage avec une solution aqueuse acide ayant un pH < 3 de ces matières carbonées, et
- une étape m) de filtration de ces matières carbonées.

12. Procédé selon l'une quelconque des revendications précédentes, **caractérisé en ce que** le solvant utilisé à l'étape b) est choisi parmi le dichlorométhane, le cyclohexane, le toluène, l'acétate d'éthyle, le diéthyléther, le 2-butanone, la 1-méthyl-2-pyrrolidone, le tétrahydrofurane, le N,N-diméthylformamide, le diméthylsulfoxyde, l'acétone, l'éthanol ou l'acétonitrile, ou les mélanges de deux ou plus de ceux-ci.

13. Procédé selon l'une quelconque des revendications précédentes, **caractérisé en ce qu'**il comprend de plus une étape o) de tri des métaux séparés à l'étape c).

## Patentansprüche

1. Verfahren zum Recyclen von Lithiumbatterieelektroden auf der Grundlage eines Lithium- und Eisen- und Graphitphosphatgemischs und/oder auf der Grundlage eines Lithium- und Eisenphosphatgemischs und Lithium- und Titanoxidgemischs und/oder Lithiumbatterien, die derartige Elektroden enthalten, **dadurch gekennzeichnet, dass** es die folgenden Schritte umfasst:
a) Zerkleinern der Elektroden und/oder der Batterien,
b) Lösen der organischen Bestandteile und/oder Polymere der Elektroden und/oder der Batterien in einem organischen Lösemittel,
c) Trennen der nicht gelösten Metalle, die in der Suspension, erhalten in Schritt b), vorhanden sind,
d) Filtern über einen Filter unter Druck der Suspension, erhalten in Schritt c),
e) Wiedergewinnen der festen Masse, zurückgehalten auf dem Filter unter Druck in Schritt d), und Suspendieren dieser festen Masse in Wasser,
f) Wiedergewinnen des Materials, das sich in Schritt e) abgesetzt hat oder geronnen ist, erneutes Suspendieren dieses abgesetzten Materials in Wasser und Angleichen des pH-Werts der erhaltenen Suspension auf einen pH-Wert von weniger als 5, vorzugsweise weniger als 4,
g) Filtern der Suspension, erhalten in Schritt f), auf einem Filter unter Druck, und
h) Trennen, einerseits des Eisens durch Ausfällen von Eisenphosphaten, und andererseits des Lithiums durch Ausfällen von Lithiumsalz.

2. Verfahren nach Anspruch 1, **dadurch gekennzeichnet, dass** in Schritt f) der pH-Wert wie etwa 3 < pH < 4 ist, wodurch nur das Lithium im wässrigen Medium gelöst wird, und dadurch, dass Schritt h) die folgenden Schritte umfasst:
h1) Wiedergewinnen des Filtrats aus Schritt g) und Ausfällen eines Lithiumsalzes,
h2) Wiedergewinnen der festen Fraktion, zurückgehalten auf dem Filter unter Druck in Schritt g), und Lösen dieser festen Fraktion in Wasser, Einstellen des pH-Werts auf 2 < pH < 3 bei Umgebungstemperatur, wodurch sich die Ionen Fe²⁺ und Fe³⁺ und die Phosphationen PO₄³⁻ gelöst werden und das Titan in fester Form bleibt,
h3) Filtern der Suspension, erhalten in Schritt h2), und Wiedergewinnen des festen Titans auf dem Filter, und
h4) Ausfällen des Eisenphosphats, enthalten im Filtrat, das in Schritt h3) erhalten wurde.

3. Verfahren nach Anspruch 1, **dadurch gekennzeichnet, dass** in Schritt f) der pH-Wert auf pH < 1 eingestellt wird, und dadurch, dass Schritt h) die folgenden Schritte umfasst:
h5) Wiedergewinnen des festen Titans, zurückgehalten auf dem Filter in Schritt g),
h6) Wiedergewinnen des Filtrats, erhalten in Schritt g) und Ausfällen des Eisenphosphats,
h7) Trennen des Eisenphosphats durch Filtern des Filtrats, erhalten in Schritt h6), und
h8) Wiedergewinnen des Filtrats, erhalten nach dem Filtern von Schritt h7) und Ausfällen eines Lithiumsalzes.

4. Verfahren nach Anspruch 2 oder 3, **dadurch gekennzeichnet, dass** Schritt h4) oder Schritt h6) des Ausfällens des Eisenphosphats die folgenden Schritte umfasst:
h4a) oder h6a) Einstellen des pH-Werts des wiedergewonnenen Filtrats auf einen pH-Wert gleich 5, wodurch eine Ausfällung gebildet wird,
h4b) oder h6b) Filtern der Suspension, erhalten in Schritt h4a) oder h6a), Wiedergewinnen der Ausfällung in Schritt h4a) oder h6a), Waschen mit Wasser und Trocknen dieser Ausfällung bei einer Temperatur von weniger oder gleich 30 °C unter primärem Vakuum, wodurch Eisenphosphat mit der Formen Fe₃(PO₄)₂.8H₂O erhalten wird.

5. Verfahren nach Anspruch 2 oder 3, **dadurch gekennzeichnet, dass** Schritt h4) oder Schritt h6) des Ausfällens des Eisenphosphats die folgenden Schritte umfasst:
h4c) oder h6c) : Zugeben von 1 Vol%, mit Bezug auf das Gesamtvolumen des wiedergewonnenen Filtrats, H₂O₂ mit 30 Vol%,
h4d) oder h6d) Einstellen des pH-Werts der Lösung, die sich aus Schritt h4c) oder h6c) ergibt, auf einen pH-Wert gleich 5, Wiedergewinnen der gebildeten Ausfällung, Waschen und Trocknen dieser Ausfällung bei 50 °C unter Luft, wodurch amorphes Eisenphosphat FePO₄.2H₂O erhalten wird.

6. Verfahren nach Anspruch 5, **dadurch gekennzeichnet, dass** nach dem Schritt h4d) oder h6d) das erhaltene amorphe Eisenphosphat bei 500 °C unter Luft verkohlt wird, wodurch das kristalline Eisenphosphat FePO₄.2H₂O erhalten wird.

7. Verfahren nach einem der Ansprüche 2 bis 6, **dadurch gekennzeichnet, dass** der Schritt h1) oder der Schritt h8) des Ausfällens eines Lithiumsalzes die folgenden Schritte umfasst:
h1a) der h8a) Mischen des Filtrats, erhalten in Schritt g), oder Mischen des Filtrats, erhalten in Schritt h7) mit einer wässrigen Lösung mit einem pH-Wert von mehr als 12 und enthaltend eine Menge von Phosphationen PO₄³⁻ von mehr als einem Drittel der Menge von Lithiumionen Lⁱ⁺ und Erhitzen der so erhaltenen Mischung auf 50 °C, wodurch eine Ausfällung gebildet wird, und
h1b) oder h8b) Waschen mit Wasser der so erhaltenen Ausfällung, wodurch amorphes Lithiumphosphat Li₃PO₄ erhalten wird.

8. Verfahren nach einem der Ansprüche 2 bis 6, **dadurch gekennzeichnet, dass** der Schritt h1) oder h8) des Ausfällens eines Lithiumsalzes die folgenden Schritte umfasst:
h1c) oder h8c) Mischen des Filtrats, erhalten in Schritt g), oder des Filtrats, erhalten in Schritt h7, mit einer wässrigen Lösung mit einem pH-Wert >12, enthaltend eine Menge von Carbonationen CO₃²⁻, die mindestens gleich der Hälfte der Menge von Lithiumionen Li⁺ ist, enthalten in der Mischung,
h1d) oder h8d) Erhitzen der Mischung von Schritt h1c) oder h8c) auf eine Temperatur zwischen 90 °C und 100 °C und Filtern, bei 100 °C, der erhaltenen Suspension, wodurch ein trockener Extrakt von Lithiumcarbonat Li₂CO₃ erhalten wird.

9. Verfahren nach einem der Ansprüche 2 bis 6, **dadurch gekennzeichnet, dass** der Schritt h1) oder h8) des Ausfällens eines Lithiumsalzes die folgenden Schritte umfasst:
h1f) oder h8c) Durchlaufen des Filtrats, erhalten in Schritt g), oder des Filtrats von Schritt h7) über einem kationischen Ionenaustauschharz, bestehend aus Polymeren mit funktionellen Carboxylgruppierungen -COO mit einem Verhältnis von Li⁺-Molen' vorhanden in der Lösung/ g Harz zwischen 10⁻⁶ und 10⁻².
h1f) oder h8f) In-Kontakt-Bringen des Harzes aus Schritt h1e) oder h8e) mit einer Säurelösung mit einem pH-wert < 3 mit einem Volumenverhältnis Flüssigkeit/Harz < 1,
h1g) oder h8g) Wiedergewinnen des Lithiumcarbonats durch Filtern bei 100 °C der Suspension, erhalten in Schritt h1f) oder h8f).

10. Verfahren nach einem der vorhergehenden Ansprüche, **dadurch gekennzeichnet, dass** es außerdem Folgendes umfasst:
- einen Schritt i) des Reinigens des Lösemittels, enthalten im Filtrat, das in Schritt d) erhalten wurde, durch Zentrifugieren bis zum Erhalt einer farblosen Flüssigkeit,
- einen Schritt j) des Verdampfens-Kondensierens der farblosen Flüssigkeit, erhalten in Schritt i) bei einer Temperatur von weniger als oder gleich 80 °C jedoch mehr als oder gleich 60 °C, wodurch einerseits ein Feststoff wiedergewonnen wird, der aus dem Bindemittel der Elektroden besteht, und andererseits eine Flüssigkeit, die aus dem organischen Lösemittel besteht, die in Schritt b) verwendet wird, und
- optional einen Schritt n) des Recycelns des Lösemittels, erhalten in Schritt j) hin zu Schritt b).

11. Verfahren nach einem der vorhergehenden Ansprüche, **dadurch gekennzeichnet, dass** es außerdem Folgendes umfasst:
- einen Schritt k) des Extrahierens der Kohlenstoffmaterialien der Suspension, erhalten in Schritt e) durch Flotation,
- einen Schritt 1) des Waschens mit einer sauren wässrigen Lösung mit einem pH-Wert < 3 dieser Kohlenstoffmaterialien, und
- einen Schritt m) des Filterns dieser Kohlenstoffmaterialien.

12. Verfahren nach einem der vorhergehenden Ansprüche, **dadurch gekennzeichnet, dass** das Lösemittel, verwendet in Schritt b) ausgewählt ist aus Dichlormethan, Cyclohexan, Toluen, Ethylacetat, Diethylether, 2-Butanon, 1-Methyl-2-pyrrolidon, Tetrahydrofuran, N,N-Dimethylformamid, Dimethylsulfoxyd, Aceton, Ethanol oder Acetonitril oder den Mischungen von zwei oder mehrerer dieser.

13. Verfahren nach einem der vorhergehenden Ansprüche, **dadurch gekennzeichnet, dass** es außerdem einen Schritt o) des Sortierens der Metalle, getrennt in Schritt c), umfasst.

## Claims

1. Method for recycling lithium battery electrodes containing a mixed phosphate of lithium and of iron and graphite and/or containing a mixed phosphate of lithium and of iron and a mixed oxide of lithium and of titanium and/or lithium batteries containing such electrodes, **characterised in that** said method comprises the following steps:
a) grinding said electrodes and/or said batteries,
b) dissolving the organic and/or polymer components of said electrodes and/or of said batteries in an organic solvent,
c) separating the non-dissolved metals present in the suspension obtained in step b),
d) filtering the suspension obtained in step c) through a press filter,
e) recovering the solid mass retained in the press filter in step d), and suspending this solid mass in water,
f) recovering the material having deposited or coagulated in step e), again placing this deposited material in suspension in water and adjusting the pH of the suspension obtained to a pH lower than 5, preferably lower than 4,
g) filtering the suspension obtained in step f) in a press filter, and
h) separating the iron via precipitation of iron phosphates and the lithium via precipitation of a lithium salt.

2. Method according to claim 1, **characterised in that** in step f), the pH is such that 3 < pH < 4, whereby only the lithium enters into solution in the aqueous medium, and **in that** step h) comprises the following steps:
h1) recovering the filtrate from step g) and precipitating a lithium salt,
h2) recovering the solid fraction retained in the press filter in step g), and placing this solid fraction in solution in water, adjusting the pH to 2 < pH < 3 at ambient temperature, whereby the Fe²⁺ and Fe³⁺ ions and the PO₄³⁻ phosphate ions enter into solution and the titanium remains in solid form,
h3) filtering the suspension obtained in step h2) and recovering the solid titanium in the filter, and
h4) precipitating the iron phosphate contained in the filtrate obtained in step h3).

3. Method according to claim 1, **characterised in that** in step f), the pH is adjusted to a pH < 1 and **in that** step h) comprises the following steps:
h5) recovering the solid titanium retained in the filter in step g),
h6) recovering the filtrate obtained in step g) and precipitating the iron phosphate,
h7) separating the iron phosphate via filtration of the filtrate obtained in step h6), and
h8) recovering the filtrate obtained after the filtration of step h7) and precipitating a lithium salt.

4. Method according to claim 2 or 3, **characterised in that** step h4) or step h6) of precipitating the iron phosphate comprises the following steps:
h4a) or h6a) adjusting the pH of the filtrate recovered to a pH equal to 5, whereby a precipitate is formed,
h4b) or h6b) filtering the suspension obtained in step h4a) or h6a), recovering the precipitate formed in step h4a) or h6a), washing with water and drying this precipitate at a temperature less than or equal to 30°C under low vacuum, whereby iron phosphate having the formula Fe₃(PO₄)₂.8H₂O is obtained.

5. Method according to claim 2 or 3, **characterised in that** the step h4) or the step h6) of precipitating the iron phosphate comprises the following steps:
h4c) or h6c) : adding from 1% by volume to 30% by volume H₂O₂ with respect to the total volume of filtrate recovered,
h4d) or h6d) adjusting the pH of the solution resulting from step h4c) or h6c) to a pH equal to 5, recovering the precipitate formed, washing and drying this precipitate at 50°C in air, whereby amorphous FePO₄.2H₂O iron phosphate is obtained.

6. Method according to claim 5, **characterised in that** after step h4d) or h6d), the amorphous iron phosphate obtained is calcined at 500°C in air, whereby the iron phosphate crystalline FePO₄.2H₂O is obtained.

7. Method according to any of claims 2 to 6, **characterised in that** the step h1) or the step h8) of precipitating a lithium salt comprises the following steps:
h1a) or h8a) mixing the filtrate obtained in step g) or mixing the filtrate obtained in step h7) with an aqueous solution having a pH greater than 12 and containing a quantity of PO₄³⁻ phosphate ions greater than one-third of the quantity of L¹⁺ lithium ions and heating the mixture thus obtained to 50°C, whereby a precipitate is formed, and
h1b) or h8b) washing the precipitate thus obtained with water, whereby Zi₃PO₄ lithium phosphate is obtained.

8. Method according to any of claims 2 to 6, **characterised in that** step h1) or h8) of precipitating a lithium salt, comprises the following steps:
h1c) or h8c) mixing the filtrate obtained in step g) or the filtrate of step h7 with an aqueous solution having a pH>12 containing a quantity of CO₃²⁻ carbonate ions at least equal to half of the quantity of Li⁺ lithium ions contained in the mixture,
h1d) or h8d) heating the mixture from step h1c) or h8c) to a temperature between 90°C and 100°C and filtering the suspension obtained at 100°C, whereby a dry extract of Li₂CO₃ lithium carbonate is obtained.

9. Method according to any of claims 2 to 6, **characterised in that** step h1) or h8) of precipitating a lithium salt, comprises the following steps:
h1f) or h8e) passing the filtrate obtained in step g) or the filtrate of step h7) over a cationic ionexchange resin consisting of polymers having -COO⁻ carboxylic functional groups with a ratio of moles of Li⁺ present in the solution / g of resin between 10⁻⁶ and 10⁻².
h1f) or h8f) putting the resin from step h1f) or h8e) in contact with an acid solution having a pH < 3, with a volume ratio of liquid/resin < 1,
h1g) or h8g) recovering the lithium carbonate via filtration, at 100°C, of the suspension obtained in step h1f) or h8f).

10. Method according to any of the previous claims, **characterised in that** said method further comprises:
- a step i) of purifying the solvent contained in the filtrate obtained in step d), via centrifugation until a colourless liquid is obtained,
- a step j) of evaporation-condensation of the colourless liquid obtained in step i), at a temperature less than or equal to 80°C but greater than or equal to 60°C, by which a solid consisting of the binder of the electrodes and a liquid consisting of the organic solvent used in step b) are recovered, and
- optionally, a step n) of recycling the solvent obtained in step j) into step b).

11. Method according to any of the previous claims, **characterised in that** said method further comprises:
- a step k) of extracting the carbon-based materials from the suspension obtained in step e), via flotation,
- a step 1) of washing these carbon-based materials with an acidic aqueous solution having a pH < 3, and
- a step m) of filtering these carbon-based materials.

12. Method according to any of the previous claims, **characterised in that** the solvent used in step b) is chosen from dichloromethane, cyclohexane, toluene, ethyl acetate, diethyl ether, 2-butanone, 1-methyl-2-pyrrolidone, tetrahydrofuran, N,N-dimethylformamide, dimethylsulphoxide, acetone, ethanol and acetonitrile and the mixtures of two or more of these.

13. Method according to any of the previous claims, **characterised in that** said method further comprises a step o) of sorting the metals separated in step c).
